# EUROPÄISCHE PATENTANMELDUNG

(11) **EP 2 295 652 A1**
(43) Veröffentlichungstag der Anmeldung: **16.03.2011**
(21) Anmeldenummer: 10007932.6
(22) Anmeldetag: 29.07.2010
(51) Int. Cl.: E03D 9/00, E03D 9/02, C02F 1/78

(54) **Vorrichtung und Verfahren zur Desinfektion einer Toiletteneinrichtung**

(30) Priorität: 29.07.2009 DE 102009035234
(71) Anmelder: Nonnenmacher, Klaus, Prof.Dipl.-Ing., 72070 Tübingen (DE)
(72) Erfinder: Nonnenmacher, Klaus, Prof.Dipl.-Ing., 72070 Tübingen (DE)
(74) Vertreter: Wüstefeld, Regine Marie

(57) **Zusammenfassung**

Die Erfindung betrifft ein Verfahren zur Desinfektion einer Toiletteneinrichtung sowie die Toiletteneinrichtung an sich, wobei Wasser zur Spülung einer Toilette (1) über einen Spülkasten (9) in ein Spülrohr (7) und von dort in den Innenraum der Toilette (1) geleitet wird. Vor dem Eintreten in den Sptilkasten (9) wird das Wasser über einen Ozongenerator (11) geleitet und dort mit Ozon versetzt, so daß es als Ozonwasser weiterfließt, welches gelöstes Ozon und Ozongasblasen enthält. Nach dem Passieren des Ozongenerators (11) durchfließt das mit Ozon versetzte Wasser einen Ozonkonverter (33), der mittels einer katalytisch wirksamen Füllung das in dem Wasser gelöste Ozon teilweise in Wasserstoffperoxid umsetzt.

Bei dem erneuten Befüllen des Spülkastens (9) nach einem Spülvorgang bis zu einem vorherbestimmten Wasserspiegel (35) wird von dem sich hebenden Wasserspiegel (35) das Ozongas in das Spülrohr (7) und von dort in den Innenraum der Toilette (1) geleitet, um dort unerwünschte Gerüche zu binden.
Das mit Ozon versetzte Spülwasser desinfiziert zudem die Oberfläche der damit in Kontakt kommenden Toilette (1).

## Beschreibung

Die Erfindung betrifft ein Verfahren und eine Vorrichtung zur Desinfektion einer Toiletteneinrichtung. Die Toiletteneinrichtung besteht grundsätzlich aus einer Toilette, die über ein Spülrohr mit einem Spülkasten verbunden ist. Wasser wird zur Spülung der Toilette über den Spülkasten in das Spülrohr und von dort in den Innenraum der Toilette geleitet. In dem Spülkasten ist ein Tauchrohr angeordnet, um Wasser für den Spülvorgang von einer Wasserzufuhr in den Spülkasten einzuleiten.

Häufig benutzte Toiletten stellen oft ein erhebliches hygienisches Problem dar und genügen den hygienischen Anforderungen nicht. Die Desinfektion öffentlicher Toiletten, solchen auf Campingplätzen oder sonstigen Einrichtungen für eine größere Besuchermenge ist oft unbefriedigend und auf Grund des zumeist erforderlichen Personaleinsatzes kostenintensiv.
Nosokomiale Infektionen, d.h. solche Infektionen, die sich ein Patient bei einem Klankeohausaufenthalt zuzieht, nehmen trotz erheblicher Anstrengungen der Krankenhäuser eher zu und werden insbesondere auch über die Toilettenbenutzung des Patienten hervorgerufen.

Üblicherweise wird die Reinigung der Toilettensitze mittels eigens dafür vorgesehenen Chemikalienlösungen, die Biozide enthalten, meist manuell durchgeführt. Neben sonstigen Inhaltsstoffen enthalten solche Chemikalienlösungen oft auch chlorhaltige Desinfektionsmittel, die bei Gebrauch Chlor freisetzen. Als weitere Inhaltsstoffe können solche Chemikalienlösungen auch Milchsäure, Tenside und Duftstoffe enthalten. Von Milchsäure ist bekannt, daß sie mit Chlor abspaltenden Verbindungen synergistisch zusammenwirkt. Chlorierte Desinfektionsprodukte sind biologisch nicht abbaubar.

Bekannt sind selbstreinigende Toilettensitze, die motor- oder batteriebetrieben erhältlich sind. Bei ihnen wird die Reinigung der Sitzfläche nach jeder Toilettenbenutzung ausgelöst. Hier sind verschiedene Systeme bekannt. So wird z.B. eine Hygieneschleuse vollautomatisch auf dem WC-Sitz abgesetzt und fährt mit einem desinfizierend wirkenden Reiniger über diesen.

Des weiteren ist durch die EP 1 939 366 A1 eine Toiletteneinrichtung bekanntgeworden, die mit einem Spülkasten verbunden ist, in den ein Blasengenerator mündet. Dabei wird das Wasser zur Anreicherung mit (Luft-) Blasen in Form eines Kreislaufs geführt. Wenn z. B. ein Sensor die Benutzung der Toiletteneinrichtung anzeigt, wird Wasser aus dem Spülkasten in den Kreislauf gepumpt und passiert einen Gasmischer. Dort wird das Wasser mit einströmendem Gas gemischt, das vom grundsätzlichen Prinzip her einfach Luft ist. Ein weiterer, separater Teil des Kreislaufs, der aus verschiedenen Bereichen bestehen kann und eine Einspritzdüse zur Blasenerzeugung aufweist, dient dem Lösen des Gases in dem Wasser, bevor das mit dem Gas versehene Wasser unter plötzlicher Druckänderung wieder in den Spülkasten zurückgeführt wird. Nicht in dem Wasser dieses Teils des Kreislaufs gelöstes Gas wird schon deshalb über einen Lüftungsschacht nach außen geführt, um hier den Wasserstand konstant zu halten.
Durch die plötzliche Druckänderung beim Eintritt des mit dem Gas versehenen Wassers in den Spülkasten soll erreicht werden, daß relativ kleine Gasblasen in den Spülkasten gelangen oder größere Blasen sich gegenseitig durch die wirbelnde Bewegung zerstören und so auch kleine Gasblasen ergeben.
Das Vermischen des Spülwassers mit diesem, gelöste Gasblasen enthaltenden Wasser soll beim Spülvorgang der Reinigungseffekt in dem Toiletteninnenraum erhöht werden. Dazu soll auch die Ausnutzung des Marangoni-Effektes dienen, durch den die Adhäsion des Schmutzes in der Toilettenvorrichtung an dem Spülwasser verbessert werden soll. Der Marangoni-Effiekt ist an sich bei Konvektionen aus dem Bereich der Wärmeleitung bekannt. Durch sich ausbildende Wellenberge und -täler wird dabei die Oberflächenspannung des Wassers verändert.
Erwähnt ist auch, daß der Blasengenerator als Bereich für das Lösen des Gases in dem Gasmischer zusätzlich einen Ozongenerator umfassen kann. Dann wird Ozon enthaltendes Gas mit dem Spülwasser gemischt und in den Spülkasten geleitet. Auch hier gilt, daß überschüssiges, nicht in dem Wasser gelöstes Ozongas über den Lüftungsschacht abgeleitet wird und so für den Reinigungsvorgang beim Spülen nicht zur Verfügung steht. Außerdem wird durch die Einspritzdüse und der dadurch bedingten Verdüsung des mit dem Gas vermischten Wassers das in diesem enthaltene Kohlendioxid ausgetrieben. Dadurch bedingt erhöht sich der pH-Wert des Wassers und erschwert so die Lösung des Ozons in dem Wasser. Bei dem kurzen Spülvorgang kann Ozongas nicht aus dem Wasser in die zu reinigenden Bereiche des Toiletteninnenraums diffundieren und damit nicht seine desinfizierende Wirkung entfalten. Alternativ ist bei diesem Stand der Technik noch vorgesehen, daß das Wasser zur Anreicherung mit (Luft-) Blasen nicht in Form eines Kreislaufs geführt wird, sondern das der Wassertank für die Spülung selbst als Ort für das Lösen des Gases in dem Wasser verwendet wird. Des weiteren kann in noch einer Ausführungsform ein röhrenförmiger Bereich das Lösen des Gases in dem Wasser übernehmen. Dieser ist als ein Faltenrohr ausgebildet, das durch seine Form für einen plötzlichen Wechsel von Druck und Fließgeschwindigkeit sorgen kann. Dadurch entstehen in etwa kreisförmige Bewegungen von Gasblasen in Form von Turbulenzen, die für das Lösen des Gases in dem Wasser sorgen. Das offenbarte Faltenrohr ermöglicht jedoch keine turbulente Strömung.

Ausgehend von diesem Stand der Technik lag der vorliegenden Erfindung daher die Aufgabe zugrunde, ein Verfahren zur Desinfektion von Toiletteneinrichtungen bereitzustellen, das einfacher als im bekannten Stand der Technik, dabei aber kostengünstig, sehr wirksam und außerdem umweltverträglich durchzuführen ist, und auch die dafür erforderliche Vorrichtung bereitzustellen.

Diese Aufgabe wird erfindungsgemäß gelöst durch ein Verfahren zur Desinfektion einer Toiletteneinrichtung, bei dem Wasser zur Spülung einer Toilette über einen Spülkasten in ein Spülrohr und von dort in den Innenraum der Toilette geleitet wird, wobei das Wasser vor dem Eintreten in den Spülkasten über einen Ozongenerator geleitet, dort mit Ozon versetzt wird und als Ozonwasser weiterfließt, welches gelöstes Ozon und Ozongasblasen enthält, dadurch gekennzeichnet, daß der Spülkasten mit dem Ozonwasser bis zu einem vorherbestimmten Wasserspiegel befüllt wird und die in dem Ozonwasser enthaltenen Ozongasblasen in den Gasraum über dem Wasserspiegel aufsteigen, so daß bei dem Befüllen des Spülkastens bis zu dem vorherbestimmten Wasserspiegel von dem sich hebenden Wasserspiegel eine Kolbenwirkung ausgeübt wird, die das Ozongas in das Spülrohr und von dort in den Innenraum der Toilette leitet.

Mit dem erfindungsgemäßen Verfahren wird eine einfache wie umweltfreundliche Möglichkeit bereitgestellt, Toiletten aller Art zu desinfizieren. Zu diesem Zweck müssen keine herkömmlichen Biozide eingesetzt werden, welche anschließend die Kläranlagen belasten würden. Es ist außerdem keine Ökotoxizität vorhanden und es besteht auch nicht die Gefahr einer Kontaktallergie. Personalkosten für eine manuelle Reinigung der Toiletteneinrichtung werden minimiert.
Indem das Ozonwasser den Innenraum der Toilette spült, beseitigt es zugleich die dort durch eine Unsauberkeit des Toiletteninnenraums oder eine vorherige Benutzung auftretenden unangenehmen Gerüche, indem es diese vollständig oxidiert. Eventuell über das zugeführte Wasser eingetragene Bakterien, wie Legionellen und Escheria coli, werden innerhalb der Füllzeit des Spülkastens, d.h. der nach einem Aufziehvorgang benötigten Zeit zum Wiederbefüllen des Spülkastens, zuverlässig und vollständig abgetötet. Versuche mit Escheria coli haben gezeigt, daß bei einer gestellten Bakterienbelastung, etwa in Konzentrationsbereichen, wie sie in verunreinigtem Wasser vorliegen können, keine zwei Minuten erforderlich sind, um die Keimbelastung innerhalb der Nachweisgrenze zu eliminieren.
Ein weiterer Vorteil des erfindungsgemäßen Verfahrens liegt auch in der dadurch bewirkten Obertlächen-Hydrophilierung. Es ist bekannt, daß die Benetzung von

Oberflächen von der Oberflächenspanaung des Wassers abhängt. Ozon wirkt so, daß es das Wasser entspannt Dadurch fließen die Tropfen ab. Würden sie hängen bleiben, könnten diese Wassertropfen verdunsten. Es blieben Kalkablagerungen zurück, die ihrerseits eine Grundlage für die Bildung eines Biofilms und die unerwünschte Ansiedlung von Bakterien wären. Da dies durch die Herabsetzung der Oberflächenspannung des Wassers durch das Ozon verhindert wird, kann auch der Einsatz von Tensiden zu Reinigungszwecken wenn nicht vermieden, so doch deutlich verringert werden.

Noch ein Vorteil des erfindungsgemäßen Verfahrens ergibt sich, wenn eisenhaltiges Wasser für die Spülung verwendet werden muß. Das Eisen kommt in der Regel in Form der Eisen(III)-Oxide in dem Wasser vor. Zusammen mit Kalkrückständen ergeben sich dann oft braune Beläge. Dadurch, daß das Wasser mit Ozon versetzt wird und als Ozonwasser weiterfließt, das nunmehr gelöstes Ozon und Ozongasblasen enthält, werden die in dem Wasser enthaltenen Eisen(III)-Oxide durch das Ozon zu Eisenhydroxid oxidiert. Eisenhydroxid löst sich nicht in Wasser, fällt daher als Flocke schon im Spülkasten aus und wird bei einem Spülvorgang als Schlamm in den Ablauf gespült. Dadurch kann auch der Verbrauch an Essigreiniger auf ein Minimum reduziert werden.

Gemäß einer bevorzugten Ausführungsform durchfließt das mit Ozon versetzte Wasser nach dem Passieren des Ozongenerators einen Ozonkonverter, bevor es in den Spülkasten eintritt.
Der Ozonkonverter hat die Aufgabe, mittels einer katalytisch wirksamen Füllung das in dem Wasser gelöste Ozon teilweise in Wasserstoffperoxid (H₂O₂) umzusetzen. Damit wird eine längerfristige oxidative Wirkung des Wasserinhalts im Spülkasten erreicht, was z.B. dann von Bedeutung ist, wenn die Toiletteneinrichtung über einen längeren Zeitraum unbenutzt bleibt. Denn während sich Ozon mit einer Halbwertszeit von etwa zehn Minuten abbaut, bleibt H₂O₂. und damit auch dessen oxidative Wirkung, über Tage und Wochen gelöst in dem Wasser des Spülkastens erhalten.

Bei Versuchen hat sich gezeigt, daß der Anteil von gelöstem Ozon in dem Wasser des Spülkastens lediglich bei Spülzyklen von weniger als fünf Minuten höher ist und der Anteil von H₂O₂ niedriger. Dies hängt damit zusammen, daß die Peroxidbildung bis zu fünf Minuten dauern kann.

Wenn der Spülkasten der Toiletteneinrichtung mit dem Ozonwasser bis zu einem vorherbestimmten Wasserspiegel befüllt wird, können die in dem Ozonwasser enthaltenen Ozongasblasen in den Gasraum über dem Wasserspiegel aufsteigen.
Erfindungsgemäß wird bei dem Befüllen des Spülkastens bis zu dem vorherbestimmten Wasserspiegel von dem sich dabei hebenden Wasserspiegel eine Kolbenwirkung ausgeübt, die das Ozongas in das Spülrohr und von dort in den Innenraum der Toilette leitet. Als Innenraum der Toilette sind dabei alle Gasräume zu verstehen, die das Ozongas erreichen kann. Dazu gehören vor allem der Wasserverteiler und der Innenraum der Toilette, der dadurch gleichzeitig ein zweiter Gasraum ist.

Vorzugsweise wird das in das Spülrohr und von dort in den Innenraum der Toilette geleitete Ozongas dort als feuchtes Ozongas hingeleitet, wodurch sich eine gegenüber trockenem Ozongas weitaus höhere desinfizierende Wirkung ergibt. Dadurch, daß das Ozongas feucht ist, kann es sein drittes Sauerstoffatom leichter abgeben und entsprechend seine desinfizierende Wirkung besser entfalten. Besonders bevorzugt wird das Ozongas in dem Tauchrohr, d.h. während es das Tauchrohr passiert, mit Wasserdampf gesättigt.

Auf diese Weise ergibt sich ein äußerst effektives Verfahren, das nur von wenigen, dazu noch hinsichtlich der Toxizität unbedenklichen Grundstoffen ausgeht. Neben dem in dem Ozongenerator hergestellten Ozon werden nur noch die Grundstoffe Wasser, in dem das Ozon gelöst wird, und Luftsauerstoff als Trägergas für das Ozon benötigt.
Dadurch, daß Luftsauerstoff als Trägergas für das Ozon verwendet wird, kann sogar noch ein weiterer Vorteil erreicht werden, indem dadurch die Kläranlage entlastet wird. Das von dem Ozongenerator erzeugte Ozon verläßt den Ozongenerator in an sich bekannter Weise als Ozon-Luft-Gasgemisch. Durch Einleiten dieses Ozon-Luft-Gasgetnisches in das Wasser, das den Ozongenerator passiert, gelangt in den Spülkasten nicht nur Ozon, sondern zusätzlich auch Sauerstoff, der mit dem Wasser über das Spülrohr auch in den Innenraum der Toilette und von dort als Abwasser in die Kläranlage gelangt. Auf diese Weise verhindert der in dem Ozon-Luft-Gasgemisch zugeführte Sauerstoff anaerobe Bedingungen. Zugleich dient dieses Mehr an Sauerstoff der Nitrifizierung. Unter Nitrifizierung wird der Abbau von Ammonium (NH₄⁺) in Nitrit unter Einbindung von Luftsauerstoff verstanden. Durch den Abbau von Aminosäuren und Proteinen oder allgemein organischen Verbindungen z. B. durch Bakterien wird in an sich bekannter Weise Ammonium freigesetzt. In höheren Konzentrationen, wie sie im Toiletten- bzw. Kläranlagenbereich auftreten können, ist dies aufgrund des toxischen Ammoniaks nicht unbedenklich. Die Ammoniakoxidation zu Nitrit (NO₂) stellt den ersten Schritt der Nitrifizierung dar. Danach erfolgt die Umwandlung in das Nitrat (NO₃⁻). Aus den angegebenen Summenformeln wird ersichtlich, daß dieser Vorgang Sauerstoff verbraucht.

Da jede Toiletteneinrichtung notwendigerweise Spaltbereiche aufweist, in die das Ozongas strömt, sowie Durchlässe, kann das Ozongas in die Spaltbereiche und durch die Durchlässe in die Umgebung der Toiletteneinrichtung strömen. Durchlässe sind dabei im Sinne der vorliegenden Erfindung z.B. ein Spalt zwischen der Toilette und dem darauf angebrachten Toilettensitz oder zwischen dem Toilettensitz und dem Toilettendeckel. Ein weiterer zwangsläufig vorhandener Spalt ergibt sich im Spülkastenbereich an dem Hebel, mit dem die Wasserspülung betätigt wird. Das gasförmige Ozon dringt durch Strömung und Diffusion in alle Spaltbereiche. So wird die Entwicklung von Biofilmen verhindert, auf denen sich sonst Bakterien ansiedeln könnten. Das Ozongas desinfiziert auf diese Weise auch solche Spaltbereiche schnell und wirksam, die nicht ohne weiteres zugänglich sind. Außerdem strömt das gasförmige Ozon dann weiter in die Umgebung der Toiletteneinrichtung und oxidiert dort jegliche Geruchsemissionen. Das Ozongas reinigt aufgrund seiner schnellen Wirkung die Gerüche außerhalb der Toilette auch bei kurzfristig wiederholter Benutzung. Besonders bei öffentlichen Toiletten oder in engen Verhältnissen, wie sie im Flugzeug, Bus oder in der Bahn anzutreffen sind, hat somit der Nachfolger vom Vorbenutzer keine beeinträchtigenden Geruchsemissionen mehr zu erwarten.

Wenn die Wasserzufuhr in den Spülkasten beendet wird, sobald in diesem der vorherbestimmte Wasserspiegel erreicht wird, kann dadurch die Ozonproduktion in dem Ozongenerator automatisch, hydropneumatisch gestoppt werden. Dies vereinfacht die Anwendung der Einrichtung und sorgt für einen sparsamen Gebrauch. Außerdem kann auf diese Weise die an sich gewünschte Ozonemission in die Umgebung der Toiletteneinrichtung selbst in unbelüfteten Räumen weit unter der zulässigen Grenzkonzentration gehalten werden. Besonders vorteilhaft ist, daß auf diese Weise auch eine Kumulierung von H₂O₂ wirksam vermieden wird.

Das erfindungsgemäße Verfahren kann in vielfältigster Weise in Toiletteneinrichtungen eingesetzt werden. So kann es zur Desinfektion von öffentlichen Toiletten, von Toiletten in Flugzeugen, Schiffen, Bahn und Bus, in Krankenhäusern, Sanatorien und sonstigen Pflegeeinrichtungen verwendet werden, wobei diese Aufzählung nicht abschließend ist.

Die Erfindung betrifft auch eine Vorrichtung zur Desinfektion einer Toiletteneinrichtung. Diese umfaßt eine Toilette, die über ein Spülrohr mit einem Spülkasten verbunden ist, wobei dem Spülkasten ein Ozongenerator vorgeschaltet ist, dadurch gekennzeichnet, daß zwischen dem Ozongenerator und dem Spülkasten ein Ozonkonverter und in dem Spülkasten ein Tauchrohr angeordnet sind, um Wasser für den Spülvorgang in den Spülkasten einzuleiten, wobei das Tauchrohr als ein Rohrreaktor ausgebildet ist.

Vorzugsweise ist in dem Spülkasten ein Tauchrohr angeordnet, um Wasser für den Spülvorgang in den Spülkasten einzuleiten. Das Tauchrohr kann als ein Rohrreaktor ausgebildet sein, um das Ozon und den Sauerstoff, der bei der Ozonproduktion als Trägergas dient, besser in dem Wasser zu lösen. Der Rohrreaktor kann eine Wicklung des Reaktorrohrs oder eine Füllung aufweisen, um den Weg, den das Wasser in dem Rohrreaktor zurücklegt, zu verlängern bzw. um die Durchflußgeschwindigkeit des Wassers in dem Rohrreaktor zu verringern. Beides dient einer besseren Lösung des Ozons in dem Wasser und damit einer Optimierung der Desinfektionswirkung.

Bevorzugt weist die Toilette einen Deckel auf. Wenn dieser Deckel nach einer Benutzung der Toilette vorschriftsmäßig geschlossen wird, kann das gasförmige Ozon an dem Toilettensitz, der mit dem Deckel zusammenwirkt, vorbeiströmen und so auch diesen Bereich der Toilette auf einfache Weise desinfizieren.

Zwischen dem Ozongenerator und dem Spülkasten ist vorzugsweise ein Ozonkonverter angeordnet, der das Ozon teilweise in Wasserstoffperoxid umsetzt.
Der Konverter weist gemäß einer weiteren Ausführungsform eine Füllung auf, die ausgewählt ist aus Kupferoxid, Metallen der Platingruppe, Oxiden der Übergangsmetalle oder Mischungen davon. Die Füllung ist katalytisch wirksam.
Die Füllung kann ausgewählt sein aus einer Mischung, die Mangandioxid und Kupferoxid enthält, insbesondere kann sie aus Hopkaliten ausgewählt sein.

Im folgenden soll die Erfindung anhand von Ausführungsbeispielen und der beigefügten Zeichnung näher erläutert werden.

Es zeigen:
- Fig. 1: eine schematische, geschnittene Ansicht einer erfindungsgemäßen Vorrichtung;
- Fig. 1a: ein schematisch dargestellter Ausschnitt einer nicht erfindungsge- mäßen Vorrichtung mit einem Tauchrohr in einem Spülkasten, un- ter Verwendung von Ozonwasser, das kein überschüssiges, gasför- miges, nicht in dem Wasser gelöstes Ozon aufweist;
- Fig. 1b: ein schematisch dargestellter Ausschnitt der erfindungsgemäßen Vorrichtung, der die Kolbenwirkung des sich erhöhenden Wasser- standes für die aus dem Wasser aufsteigenden Ozongasblasen ver- anschaulicht;
- Fig. 2: eine schematische, geschnittene Ansicht eines Rohrreaktors, der eine Füllung in Form von Glaskugeln aufweist, und
- Fig. 3: eine schematische, geschnittene und unvollständige Ansicht eines Rohrreaktors in Form einer Tauchspirale, die eine Füllung in Form von Spänen aufweist.

### 1. Ausführungsbeispiel

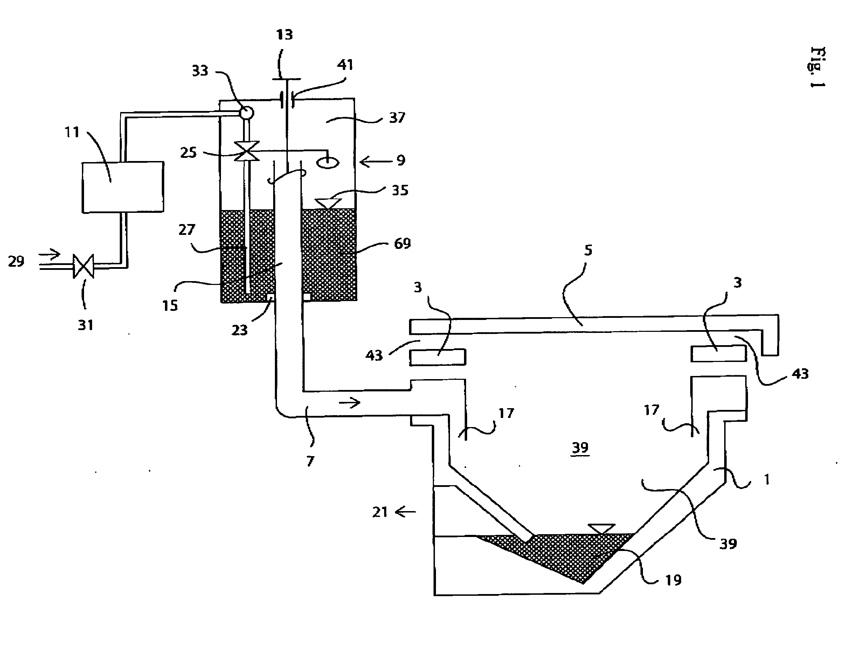

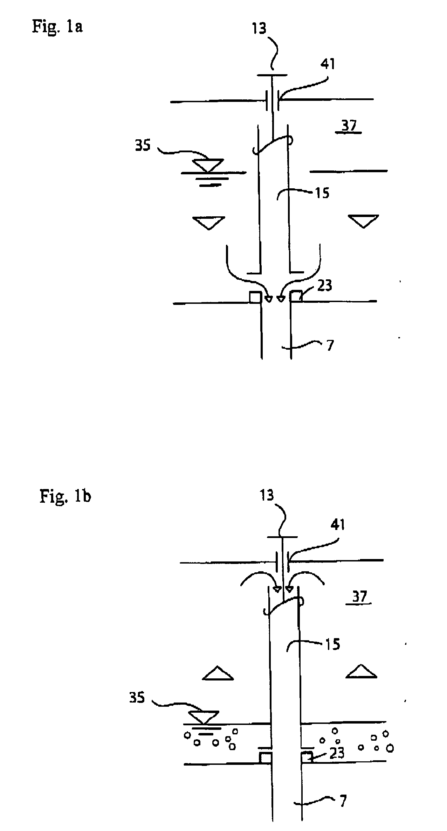

In Fig. 1 ist eine Toilettenemrichtung dargestellt, die eine Toilette 1 mit einem Toilettensitz 3 aufweist, der mit einem Deckel 5 verschließbar und über ein Spülrohr 7 mit einem insgesamt mit 9 bezeichneten Spülkasten verbunden ist. Zu der Toiletteneinrichtung gehört außerdem ein mit dem Spülkasten 9 verbundener Ozongenerator 11. Dieser benötigt zu seinem Betrieb Energie, welche einem Stromnetz entnommen werden kann. Diese Energie kann aber genauso über eine Batterie, von einem Dynamo, der z.B. wasserdruckbetrieben ist, oder von einem Solarpanel zugeführt werden. Diese verschiedenen Möglichkeiten, die dem Fachmann an sich bekannt sind, wurden in Fig. 1 nicht näher dargestellt.

Die Benutzung der Toiletteneinrichtung erfolgt zunächst, wie dies üblicherweise bekannt ist und hier kurz beschrieben werden soll, um gleichzeitig die erfindungsgemäße Desinfektion erläutern zu können.
Nachdem die Benutzung der Toilette 1 durch eine Person abgeschlossen ist, schließt diese den Deckel 5 und reinigt den Innenraum der Toilette 1 durch Betätigung eines Zughebels 13. Durch diese Betätigung des Zughebels 13 oder einer vergleichbaren Vorrichtung mit entsprechender Wirkung wird ein in an sich bekannter Weise damit verbundenes Standrohr 15 gehoben. Dies bewirkt, daß ein Wasservorrat aus dem Spülkasten 9, an dem der Zughebel 13 angebracht ist, durch das Spülrohr 7, in das der Spülkasten 9 mündet, zu einem Wasserverteiler 17 fließt. Der Wasserverteiler 17 stellt einerseits die Öffnung des Spülrohrs 7 in den Innenraum der Toilette 1 dar und ist andererseits als umlaufender Spalt in der Toilette 1 ausgebildet. Dadurch kann das Wasser in dem Innenraum der Toilette 1 in etwa gleichmäßig verteilt werden, so daß es deren Innenwandung im wesentlichen vollständig benetzt und abspült. Über einen Siphon 19 wird das Wasser anschließend in den Ablauf 21 und von dort in die Kanalisation oder ein der Entsorgung dienendes Reservoir geführt. Ist der Spülkasten 9 entleert, führt dies dazu, daß sich das Standrohr 15 senkt, und den Spülkasten 9 verschließt. Eine Dichtung 23 sorgt für einen guten Sitz und einen ordnungsgemäßen Verschluß.
In dem Spülkasten 9 ist ein Schwimmerventil 25 angeordnet, an das sich ein Tauchrohr 27 anschließt. Das Schwimmerventil 25 ist nun geöffnet, um Wasser von einer Wasserzufuhr 29 durch den anstehenden Wasserdruck über das Tauchrohr 27 wieder in den Spülkasten 9 strömen zu lassen, Das im Ausführungsbeispiel als Handventil ausgebildete, die Wasserzufuhr 29 regelnde Wassereingangsventil 31 ist dabei geöffnet.

Erfindungsgemäß wird das in den Spülkasten 9 strömende Wasser zuvor in dem Ozongenerator 11, der in Fließrichtung des Wassers nach dem Wassereingangsventil 31 angeordnet ist, mit gasförmigem Ozon versetzt und fließt von da aus zu einem Ozonkonverter 33. Der Ozonkonverter 33 ist in Fließrichtung des Wassers vor dem Schwimmerventil 25 angeordnet. Er weist eine Füllung aus Granulat, Wolle, Spänen oder dergleichen aus Kupferoxid auf. Nach dem Passieren des Ozonkonverters 33 erreicht das Wasser das Schwimmerventil 25 und wird von da aus über das Tauchrohr 27 in den Spülkasten 9 geleitet.

Bei dem Passieren des Ozonkonverters 33 wird das Wasser teilweise zu Wasserstoffperoxid (H₂O₂) umgesetzt. Zusätzlich enthält das Wasser weiterhin darin gelöstes, nicht umgesetztes Ozon und Ozongasblasen. Das Kupferoxid wirkt als Katalysator für die Zersetzung des Ozons. Als ein solcher Katalysator können aber auch genauso andere Metalle, wie die der Platingruppe (Platin, Palladium etc.), und Metalloxide eingesetzt werden. Als solche Metalloxide sind grundsätzlich die Oxide der Übergangsmetalle oder Mischungen davon zu nennen. Als besonders gut haben sich Mischungen gezeigt, die Mangandioxid und Kupferoxid enthalten. Solche Katalysatoren sind insbesondere unter der Bezeichnung Hopkalit bekanntgeworden. Hopkalite können eine unterschiedliche Zusammensetzung aufweisen. Neben Mangandioxid und Kupferoxid können beispielsweise Nickeloxid, Kobaltoxid und Silberoxid enthalten sein, außerdem sogenannte Promotoren, wie Lithium und/oder Kaliumoxid.

Der Spülkasten 9 wird nun in an sich üblicher Weise mit Wasser bis zu einer vorherbestimmten Grenzmarke aufgefüllt, die den maximalen Wasserstand 35 definiert. Dabei ist dieses Wasser Ozonwasser. Unter dem Begriff des Ozonwassers wird im Rahmen der vorliegenden Erfindung das zuvor beschriebene Wasser verstanden, welches den Ozonkonverter 33 passiert hat und nun das darin gelöste H₂O₂ sowie nicht umgesetztes Ozon und Ozongasblasen aufweist. Trägergas für das Ozon ist Luftsauerstoff, so daß es sich immer um ein Gasgemisch aus Ozon und Luftsauerstoff handelt. Die Ozongasblasen steigen auf und sammeln sich in einem Gasraum 37. Unter diesem Gasraum 37 wird der Bereich des Spülkastens 9 verstanden, der sich oberhalb des Wasserstandes 35 in dem Spülkasten 9 befindet. Nach einem Spülvorgang hebt sich dieser Wasserstand 35 durch das über das Tauchrohr 27 nachströmende Wasser wieder und drückt dabei das Ozongas wie ein Kolben in das Spülrohr 7, von da aus weiter in den Wasserverteiler 17 und in den Innenraum der Toilette 1, der grundsätzlich in diesem Zusammenhang als ein zweiter Gasraum 39 bezeichnet werden kann. Dieser zweite Gasraum 39 bildet besonders dann günstig und stabil aus, wenn der Deckel 5 der Toilette 1 nach der Benutzung geschlossen wird.
Für die Desinfektionswirkung als solche hat es sich als wichtig erwiesen, daß das so in das Spülrohr 7, den Wasserverteiler 17 und den zweiten Gasraum 39 strömende Ozongas feuchtes Ozongas ist. Die Sättigung des Ozons mit dem Wasserdampf wird im wesentlichen in dem Tauchrohr 27 erreicht.

Untersuchungen haben gezeigt, daß das Ozongas zu 100% wasserdampfgesättigt ist. Die Zuführung des feuchten Ozongases über die zuvor geschilderte KolbenWirkung betrug im Ausführungsbeispiel ca. 15 l/min. Es hat sich darüber hinaus gezeigt, daß mit dem Einleiten von trockenem Ozongas nur eine sehr viel geringere Desinfektionswirkung erreicht werden kann.
Außer in die genannten Gasräume entweicht Ozongas auch in die Umgebung der Toiletteneinrichtung. Zunächst befindet sich ein Durchlaß für das Ozongas an der im Bereich des Zughebels 13 befindlichen Durchführung 41. Des weiteren entweicht es in einem Spalt 43 zwischen dem Toilettensitz 3 und dem Toilettendeckel 5. Das Ozongas enthält eine Luftfeuchtigkeit von 100% relativer Feuchte. Auf die Bedeutung und Vorteile dieser Ozongasströme wird weiter unten noch eingegangen.

Wenn das Wasser in dem Spülkasten 9 bis zu der vorherbestimmten Grenzmarke aufgefüllt und dadurch der maximale Wasserstand 35 erreicht ist, schließt das Schwimmerventil 25 automatisch, d.h. selbsttätig. Als Folge davon werden der Wasserzufluß und auch die Ozonproduktion unterbrochen..

In den Fig. 1a und 1b wird das erfindungsgemäße Prinzip der Kolbenwirkung noch einmal veranschaulicht, mit der das über das Tauchrohr 27 nachströmende Wasser den Wasserstand 35 hebt und dabei gleichzeitig das Ozongas in das Standrohr 15 und von da aus in das Spülrohr 7 drückt. Dabei zeigt Fig. 1a den Zustand, bei welchem lediglich Ozonwasser verwendet wird, das keine Ozonblasen und damit kein überschüssiges, gasförmiges, nicht in dem Wasser gelöstes Ozon aufweist.
Demgegenüber zeigt Fig. 1b einen sich hebenden Wasserstand, wobei das Wasser erfindungsgemäß Ozongas in Form von Ozongasblasen enthält. Diese steigen in dem Wasser zumindest teilweise auf, befinden sich dann als Ozongas über dem Wasserspiegel 35, und dieses Ozongas wird mit dem zunehmenden Wasserspiegel 35 in das Standrohr 15 und weiter in das Spülrohr 7 gedrückt.
Auf diese Weise gelangt das Ozongas in den Innenraum der Toilette 1 und kann dort wirksam zur Desinfektion des Toiletteninnenraums beitragen.

### 1.1 Untersuchung der Ozonemission

Der nachfolgend geschilderten Untersuchung wurde die DIN-Norm für Ozonemissionen DIN EN 60335-2-65 für unbelüftete Räume als Maßstab zugrundegelegt.
Der Deckel 5 der Toilette 1 wurde geschlossen und die Toilettenspülung in der weiter oben geschilderten Weise betätigt. Damit strömt Ozongas in den Innenraurn der Toilette 1 als zweitem Gasraum 39. Es strömt weiter über den Spalt 43 zwischen dem Toilettensitz 3 und dem Toilettendeckel 5 in die Umgebung der Toilette 1, Durch diese Ozonemission in die Umgebung der Toilette 1 sollen Gerüche, die aus der Benutzung der Toilette resultieren, entfernt werden.
Das DIN-Prüfraumvolumen beträgt 26,25 m³. Um die Grenzkonzentration gemäß der DIN-Norm zu erreichen, wäre eine Ozonproduktion und nachfolgende -emission von 2,6 mg O₃/min erforderlich. Das noch unter der Voraussetzung, daß kein Ozon verbraucht wird, weder durch die Reaktion mit Substanzen jeglicher Art auf dem Weg von dem Ozongenerator 11 über das Tauchrohr 27 in den Spülkasten 9 und weiter über das spülrohr 7 und den Wasserverteiler 17 in den Innenraum der Toilette 1.
Die vorliegenden Untersuchungen wurden mit verschiedenen Ozonmengen pro Minute durchgeführt, welche in dem Bereich von 7 - 0,5 mg O₃/min lagen. Dabei wurde eine für die Zwecke der erfindungsgemäßen Desinfektion bevorzugte Betriebskonzentration von 2 mg O₃/min ermittelt.

Selbst bei ständig fließendem Wasser, das dadurch erreicht wird, daß das Schwimmerventil 25 nicht schließt, kann die Grenzkonzentration in einem unbelüfteten Raum unter Berücksichtigung der Abbaurate von Ozon mit einer Halbwertszeit von 10 min bei der bevorzugten Betriebskonzentration von 2 mg O₃/min nicht erreicht werden.

### 1.2 Untersuchung der Veränderung des pH-Werts in dem Wasser

Bei dieser Untersuchung wurde die Trinkwasseraufbereitungsverordnung TAV zugrundegelegt, die einen Höchstwert des pH-Werts von 9,5 vorschreibt.

In carbonathaltigem Wasser kann der pH-Wert durch die Begasung mit Ozon erhöht werden. Hier gilt es, die Gesetzmäßigkeiten des sogenannten Kalk-Kohlensäure-Gleichgewichts zu berücksichtigen, das wesentlich für den kalkabscheidenden oder kalkauflösenden Charakter des Wassers verantwortlich ist und das Gleichgewicht zwischen CO₂, HCO₃⁻ und CO₃²⁻ betrifft. Die Grundlagen der Gesetzmäßigkeiten in diesem Kalk-Kohlensäure-Gleichgewicht sind als solche bekannt. Aus ihnen folgt, daß bei Bestimmung des pH-Werts für das Gleichgewicht zwischen CO₂ und HCO₃⁻ mit einem dabei ermittelten pK₁-Wert und dem Gleichgewicht zwischen HCO₃⁻ und CO₃²⁻ mit einem dabei ermittelten pK₂-Wert maximal ein pH-Wert des Wassers von 8,2 erreicht werden kann. Dieser liegt unterhalb des durch die TAV vorgeschriebenen Höchstwerts.

### 2. Ausführungsbeispiel

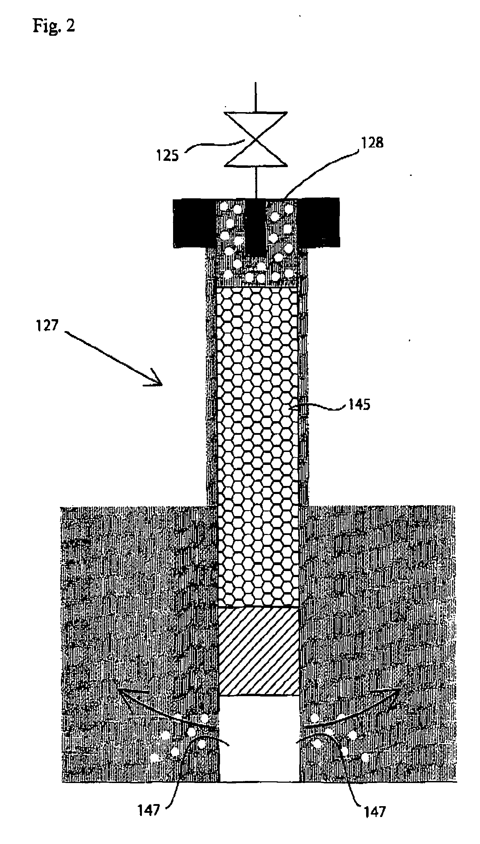

Dieses weitere, zweite Ausführungsbeispiel der erfindungsgemäßen Toiletteneinrichtung unterscheidet sich von dem ersten Ausführungsbeispiel im wesentlichen dadurch, daß sich in dem Spülkasten 109 ein in Fig. 2 näher dargestellter Rohrreaktor 127 befindet, der das in dem ersten Ausführungsbeispiel erläuterte einfache Tauchrohr 27 ersetzt und der dazu dienen soll, das Ozongas noch effektiver mit dem Wasserdampf zu sättigen. Entsprechend werden zu dem ersten Ausführungsbeispiel gleiche Bestandteile mit denselben, jedoch um 100 erweiterten Bezugsziffern versehen.

Auch die erfindungsgemäße Toiletteneinrichtung gemäß dem zweiten Ausführungsbeispiel weist eine Toilette 101 mit einem Toilettensitz 103 auf. Der Toilettensitz 103 ist mit einem Deckel 105 verschließbar und über ein Spülrohr 107 mit einem insgesamt mit 109 bezeichneten Spülkasten verbunden ist. Zu der Toiletteneinrichtung gehört außerdem ein mit dem Spülkasten 109 verbundener Ozongenerator 111. Die für dessen Betrieb benötigte Energie wird bereitgestellt, wie im ersten Ausführungsbeispiel bereits erläutert.

Das in den Spülkasten 109 strömende Wasser wird zuvor in dem Ozongenerator 111, der in Fließrichtung des Wassers 129 wieder nach dem Wassereingangsventil 131 angeordnet ist, mit gasförmigem Ozon versetzt und fließt von da aus zu einem Ozonkonverter 133. Der Ozonkonverter 133 ist in Fließrichtung des Wassers vor dem Schwimmerventil 125 angeordnet. Er weist eine Füllung auf, wie im ersten Ausführungsbeispiel bereits erläutert.
Nach dem Passieren des Ozonkonverters 133 erreicht das Wasser das Schwimmerventil 125, an das sich nun kein Tauchrohr 27 anschließt, um das Wasser in den Spülkasten 109 zu leiten, sondern ein Rohrreaktor 127, der im folgenden näher beschrieben werden soll.

Der Rohrreaktor 127 weist zunächst eine Gasfritte 128 auf, welche das Wasser im Anschluß an das Schwimmerventil 125 unter dem anstehenden Wasserdruck in den Rohrreaktor 127 hineinführt. Das die Wasserzufuhr 129 regelnde Wassereingangsventil 131 ist dabei geöffnet.
An der Gasfritte 128 werden Gasblasen gebildet, die das Ozon enthalten und im Rohrreaktor 127 aufsteigen. Um die Durchlaufgeschwindigkeit zu reduzieren, enthält der Rohrreaktor 127 eine Füllung und der Bereich, in dem die Füllung im Anschluß an die Fritte 128 angeordnet ist, wird als Füllkörperbereich 145 bezeichnet. Die Füllung kann aus Kugeln, Hohlkörpern oder anderen Körpern bestehen, vorzugsweise wird sie, wie hier in dem Ausführungsbeispiel, in einer Variante aus Rohrstückchen und in einer anderen Variante aus Glaskugeln 147 gebildet, wie in einem Ausschnitt des in Fig. 2 gezeigten Füllkörperbereichs gemäß Linie I-I bis II-II in Fig. 2a dargestellt. Es versteht sich für den Fachmann von selbst, daß die Nennung und Verwendung dieser beiden Füllungsvarianten exemplarischen Charakter hat. Anstelle dieser Füllungen können z.B. auch Raschig-Ringe verwendet werden. Für den Fachmann ist ersichtlich, daß darüber hinaus auch noch andere Packungen als Füllung geeignet sind.

Wesentlich ist, daß diese Füllung die ihr zukommenden Aufgaben erfüllt. Dabei ist sie zum einen als eine Vorrichtung zur Zerkleinerung der Ozongasblasen und zum anderen als eine Stoffaustauschkolonne zu sehen. Während jedoch eine Stoffaustauschkolonne im herkömmlichen Sinn üblicherweise einen hohen Gasanteil aufweisen, der eine geringe Flüssigkeitsmenge aufzunehmen hat, soll vorliegend eine kleine Gasmenge in einer relativ dazu großen Flüssigkeitsmenge aufgenommen werden. Durch die Füllung wird zunächst bewirkt, daß sich die Gasblasenzahl erheblich erhöht und der Blascndurchmesser entsprechend verkleinert wird. In Fig. 2a, die den weiter oben schon erläuterten Ausschnitt aus dem Füllkörperbereich 145 darstellt, ist dies zeichnerisch veranschaulicht. Entsprechend arbeitet die Füllung als ein Blasen-Shredder. Durch die Verkleinerung des Gasblasendurchmessers vergrößert sich bei gleichbleibendem Gasvolumen die Oberfläche erheblich. Die Oberfläche ist direkt proportional zum Stoffaustausch. Außerdem wird durch den Gasdruck in dem Füllkörperbereich zusätzlich die Löslichkeit des Ozons in dem Wasser erhöht.
Die Füllkörper können porös oder glatt sein. Durch die Füllkörper wird die Fließgeschwindigkeit des Ozons in dem Füllk-örperbereich 145 verringert. Dadurch hat das Ozon ausreichend Zeit, sich in dem Wasser, mit dem es durch den Rohrreaktor 127 fließt, zu lösen. Da für die Herstellung des Ozons immer auch Luftsauerstoff als Trägergas erforderlich ist, und das Ozon den Ozongenerator 111 als 0zon-Luft-Gasgemisch verläßt, kann sich außerdem auch dieser Luftsauerstoff besser in dem Wasser lösen, was die schon im Hinblick auf das erste Ausführungsbeispiel geschilderten Vorteile hat.

Der Füllkörperbereich 145 ist, in Fließrichtung des Wassers betrachtet, nach unten hin abgeschlossen und das mit dem Ozon und dem Luftsauerstoff angereicherte Wasser verläßt den Rohrreaktor 127 durch Schlitze 147, die in diesem Endbereich des Rohrreaktors 127 angeordnet sind, um den Spülkasten bis zu dem vorherbestimmten maximalen Wasserstand 135 im Spülkasten zu befüllen.

### 3. Ausführungsbeispiel

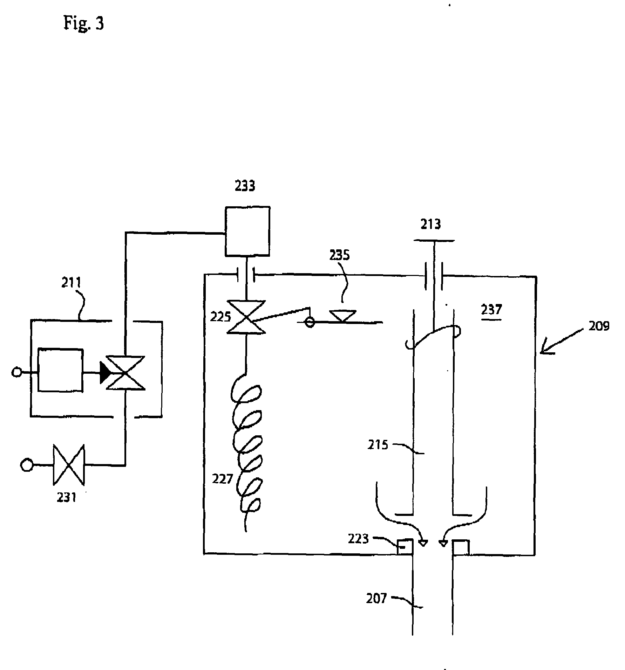

Dieses weitere, in Fig. 3 dargestellte, dritte Ausführungsbeispiel der erfindungsgemäßen Toiletteneinrichtung unterscheidet sich von dem zweiten Ausführungsbeispiel im wesentlichen durch die Ausgestaltung des Rohrreaktors 227 in dem Spülkasten 209. Auch hier ersetzt diese Ausführung des Rohrreaktors 227 das in dem ersten Ausführungsbeispiel erläuterte einfache Tauchrohr 27. Entsprechend werden zu dem ersten Ausführungsbeispiel gleiche Bestandteile mit denselben, jedoch um 200 erweiterten Bezugsziffern versehen.

Auch bei dieser dritten Ausführung weist eine Toilette 201 mit einem Toilettensitz 203 auf. Der Toilettensitz 203 ist mit einem Deckel 205 verschließbar und über ein Spülrohr 207 mit einem insgesamt mit 209 bezeichneten Spülkasten verbunden ist. Zu der Toiletteneinrichtung gehört außerdem ein mit dem Spülkasten 209 verbundener Ozongenerator 211. Die für dessen Betrieb benötigte Energie, wird bereitgestellt, wie im ersten Ausführungsbeispiel bereits erläutert.

Das in den Spülkasten 209 strömende Wasser wird zuvor in dem Ozongenerator 211, der in Fließrichtung des Wassers wieder nach dem Wassereingangsventil 231 angeordnet ist, mit gasförmigem Ozon versetzt. Der Ozongenerator 211 beinhaltet einen Venturi-Injektor 212, der einen hohen Wirkungsgrad für das Lösen des Ozons in dem von der Wasserzufuhr 229 kommenden Wassers erzielt. Dieser Venturi-Injektor 212 ist geschlossen, wenn das Ventil 225 geschlossen ist. Das mit dem Ozon versetzte Wasser fließt von da aus weiter zu einem Ozonkonverter 233. Der Ozonkonverter 233 ist in Fließrichtung des Wassers vor dem Schwimmerventil 225 angeordnet. Er weist eine Füllung auf, wie im ersten Ausführungsbeispiel bereits erläutert.
Nach dem Passieren des Ozonkonverters 233 erreicht das Wasser das Schwimmerventil 225, an das sich nun kein Tauchrohr 27 anschließt, um das Wasser in den Spülkasten 209 zu leiten, sondern ein Rohrreaktor 227, der im folgenden näher beschrieben werden soll.

Der Rohrreaktor 227 weist eine Wicklung in Form einer Schlauchrolle auf, die in verschiedener Länge ausgeführt sein kann. Die Füllung besteht im Ausführungsbeispiel aus Kupferdrahtwolle. Es ist auch hier ersichtlich, daß die Verwendung von Kupferdrahtwolle exemplarischen Charakter hat. Es können verschiedenste Granulate in Form von Wolle oder Spänen Verwendung finden.
Des weiteren wurden in der Versuchsausfürung dieses dritten Ausführungsbeispiels Wicklungen bis zu einer Länge von 10 m eingesetzt und ergaben gute Ergebnisse. Bevorzugt war dabei eine Wicklung, die eine Länge von ca. 10 m aufwies, weil diese eine möglichst lange Verweildauer des Wassers zusammen mit den Ozongasperlen in dem Rohrreaktor 227 ermöglichte. Auch der Rohrreaktor 227 dieses Ausführungsbeispiels dient dazu, die Durchlaufgeschwindigkeit des Ozons bzw. des Ozon-Sauerstoff-Gasgemischs in dem Rohrreaktor 227 zu reduzieren. Dabei befindet sich die die Wicklung bildende Spule nach dem Befüllen des Spülkastens 209 unterhalb des maximalen Wasserstandes 235 in dem Spülkasten 209.
Es hat sich gezeigt, daß durch die Wicklung des Rohrreaktors die Fließgeschwindigkeit des Wassers 229, welche die Ozongasperlen enthält, wirksam verringert wird. Dadurch hat das Ozon auch hier ausreichend Zeit, sich in dem Wasser, mit dem es durch den Rohrreaktor 227 fließt, zu lösen. Da für die Herstellung des Ozons immer auch Luftsauerstoff als Trägergas erforderlich ist, und das Ozon den Ozongenerator 211 als Ozon-Luft-Gasgemisch verläßt, kann sich außerdem auch dieser Luftsauerstoff besser in dem Wasser lösen, was die schon im Hinblick auf das erste Ausführungsbeispiel geschilderten Vorteile hat.

Im folgenden soll noch auf einen wesentlichen Aspekt eingegangen werden, der die Reaktion und damit das Lösen des Ozons in dem Wasser während der Verweilzeit in dem Rohrreaktor 227 betrifft.
In dem Rohrreaktor 227 herrscht eine echte turbulente Strömung, d.h. eine Strömung mit einer Reynoldszahl Re von >> 2300. Für die Untersuchung des Strömungsverhaltens in dem erfindungsgemäßen Rohrreaktor 227 wurden die bekannten Färbeversuche von Reynolds durchgeführt. Danach sollte sich bei einer laminaren Strömung, d.h. bei einer Reynoldszahl < als Reₖᵣᵢₜ = 2300, bei Zugabe eines Farbstoffs in den Strömungspfad der Rohrströmung keine Durchmischung in radialer Richtung ergeben. Bei dem Vorliegen einer turbulenten Strömung verteilt sich jedoch der Farbstoff spontan in radialer Richtung und erzeugt eine Farblösung mit vollständiger Durchmischung. Solche Verwirbelungen können sich erst ab einer Grenzgeschwindigkeit, die mit Re = 2300 beschrieben werden aknn, einstellen. Eine solche vollständige Durchmischung wurde bei den Farbversuchen in dem erfindungsgemäßen Rohrreaktor bestätigt.
In bezug auf diese dritte Ausführungsform der erfindungsgemäßen Toiletteneinrichtung mit der spiralförmigen Ausgestaltung des Rohrreaktors 227 ist noch besonders darauf hinzuweisen, daß die drei für die Wirksamkeit wesentlichen Verfahresschritte des Konvertierens von O₃ zu H₂O₂, das Verkleinern der Gasblasen zur Erhöhung ihrer wirksamen Oberfläche und das Erreichen einer turbulenten Rohrströmung mit dem Vorteil einer hundertprozentigen Durchmischung des Wassers mit den feinverteilten Ozongasblasen alle gleichzeitig in dem mit Granulat in Form von Wolle oder Späne gefüllten spriralförmigen Tauchrohr als Rohrreaktor 227 stattfinden. Die Länge des Tauchrohres bzw. der Tauchspirale wird dabei vorzugsweise so gewählt, daß sich das Ozon in Form der Ozongasblasen in dem Wasser vollständig lösen kann.

Zusammenfassend ist festzustellen, daß gemäß den Ausführungsformen, wie weiter oben in den Beispielen 1 bis 3 beschrieben, die Desinfektion in dem Wasserverteiler 17, 117, 217 des Toiletteninnenraums in Form des zweiten Gasraums 39, 139, 239 und des Spalts zwischen dem Toilettensitz und dem Toilettendeckel 43, 143,243 immer mit wasserdampfgesättigtem Ozongas erfolgt und zusätzlich auch die Desinfektion des Wasserverteilers 17, 117, 217 und des Spülrohrs 7, 107, 207 bewirkt. Dabei dient das Spülrohr 7, 107, 207 zur Lieferung von Ozonwasser wie Ozongas aus dem Spülkasten in den Verteiler 17, 117, 217. Bei einer hohen Frequenz der Toilettenbenutzung, wie dies gerade bei den hinsichtlich der Desinfektion problematischen öffentlichen Toiletten der Fall ist, befindet sich gelöstes Restozon im Spülkastenwasser, so daß das Spülwasser zur gesamten Ozondosis beiträgt.

## Patentansprüche

1. Verfahren zur Desinfektion einer Toiletteneinrichtung, bei dem Wasser zur Spülung einer Toilette (1) über einen Spülkasten (9) in ein Spülrohr (7) und von dort in den Innenraum der Toilette (1) geleitet wird, wobei das Wasser vor dem Eintreten in den Spülkasten (9) über einen Ozongenerator (11) geleitet, dort mit Ozon versetzt wird und als Ozonwasser weiterfließt, welches gelöstes Ozon und Ozongasblasen enthält, **dadurch gekennzeichnet, daß** der Spülkasten (9) mit dem Ozonwasser bis zu einem vorherbestimmten Wasserspiegel (35) befüllt wird und die in dem Ozonwasser enthaltenen Ozongasblasen in den Gasraum über dem Wasserspiegel (35) aufsteigen, so daß bei dem Befällen des Spülkastens (9) bis zu dem vorherbestimmten Wasserspiegel (35) von dem sich hebenden Wasserspiegel (35) eine Kolbenwirkung ausgeübt wird, die das Ozongas in das Spülrohr (7) und von dort in den Inneruaum der Toilette (1) leitet.

2. Verfahren nach Anspruch 1, **dadurch gekennzeichnet, daß** das mit Ozon versetzte Wasser nach dem Passieren des Ozongenerators (11) einen Ozonkonverter (33) durchfließt, bevor es in den Spülkasten (9) eintritt, und daß der Ozonkonverter mittels einer katalytisch wirksamen Füllung das in dem Wasser gelöste Ozon teilweise in Wasserstoffperoxid umsetzt,

3. Verfahren nach Anspruch 1 oder 2, **dadurch gekennzeichnet, daß** das in das Spülrohr (7) und von dort in den Innenraum der Toilette (1) geleitete Ozongas als feuchtes Ozongas in das Spülrohr (7) und den Innenraum der Toilette (1) geleitet wird.

4. Verfahren nach Anspruch 3, **dadurch gekennzeichnet, daß** das Ozongas in dem Tauchrohr (27) mit Wasserdampf gesättigt wird.

5. Verfahren nach einem der Ansprüche 1 bis 4, **dadurch gekennzeichnet, daß** die Toiletteneinrichtung Spaltbereiche (43) aufweist, in die das Ozongas strömt, und daß sie Durchlässe aufweist, durch die das Ozongas in die Umgebung der Toiletteneinrichtung strömt.

6. Verfahren nach einem der Ansprüche 1 bis 5, **dadurch gekennzeichnet, daß** die Wasserzufuhr in den Spülkasten (9) beendet wird, sobald der vorherbestimmte Wasserspiegel (35) erreicht wird, und daß **dadurch** die Ozonproduktion in dem Ozongenerator (11) automatisch gestoppt wird.

7. Verfahren nach einem der Ansprüche 1 bis 6 zur Desinfektion von öffentlichen Toiletten, von Toiletten in Flugzeugen, Schiffen, Bahn und Bus, in Krankenhäusern, Sanatorien und sonstigen Pflegeeinrichtungen.

8. Vorrichtung zur Desinfektion einer Toiletteneinrichtung, mit einer Toilette, die über ein Spülrohr (7) mit einem Spülkasten (9) verbunden ist, wobei dem Spülkasten (9) ein Ozongenerator (11) vorgeschaltet ist, **dadurch gekennzeichnet, daß** zwischen dem Ozongenerator (11) und dem Spülkasten (9) ein Ozonkonverter (33) und in dem Spülkasten ein Tauchrohr (27) angeordnet sind, um Wasser für den Spülvorgang in den Spülkasten (9) einzuleiten, wobei das Tauchrohr als ein Rohrreaktor (127) ausgebildet ist.

9. Vorrichtung nach Anspruch 8, **dadurch gekennzeichnet, daß** der Rohrreaktor (127) in Form einer Wicklung des Reaktorrohrs (127) ausgebildet ist, um den durch das Wasser in dem Rohrreaktor (127) zurückgelegten Weg zu verlängern.

10. Vorrichtung nach Anspruch 8, **dadurch gekennzeichnet, daß** der Rohrreaktor (127) eine Füllung aufweist, um die Durchflußgeschwindigkeit des Wassers in dem Rohrreaktor (127) zu verringern.

11. Vorrichtung nach einem der Ansprüche 8 bis 10, **dadurch gekennzeichnet, daß** die Toilette (1) einen Deckel (5) aufweist.

12. Vorrichtung nach einem der Ansprüche 8 bis 11, **dadurch gekennzeichnet, daß** der Konverter (33) eine Füllung aufweist, und daß die Füllung ausgewählt ist aus Kupferoxid, Metallen der Platingruppe, Oxiden der Übergangsmetalle oder Mischungen davon.

13. Vorrichtung nach Anspruch 12, **dadurch gekennzeichnet, daß** die katalytisch wirksame Füllung ausgewählt ist aus einer Mischung, die Mangandioxid und Kupferoxid enthält, insbesondere aus Hopkalit.
